# EUROPÄISCHE PATENTSCHRIFT

(11) **EP 1 749 143 B1**
(45) Veröffentlichungstag und Bekanntmachung des Hinweises auf die Patenterteilung: **03.10.2007**
(21) Anmeldenummer: 05746498.4
(22) Anmeldetag: 20.05.2005
(51) Int. Cl.: E21B 47/00, E21D 20/00

(54) **VORRICHTUNG ZUR UNTERSUCHUNG VON ANKERBOHRLÖCHERN**
DEVICE FOR EXAMINING ROTOR DRILLED HOLES
DISPOSITIF D'INSPECTION DE TROUS DE FORAGE ET DE MONTAGE DE MOYENS D'ANCRAGE

(30) Priorität: 28.05.2004 DE 102004026702
(43) Veröffentlichungstag der Anmeldung: 07.02.2007
(73) Patentinhaber: DMT GmbH, 45307 Essen (DE)
(72) Erfinder: PETERS, Stephan, 46047 Oberhausen (DE); RAPP, Sönke, 45355 Essen (DE); RÄKERS, Eiko, 45739 Oer-Erkenschwick (DE)
(86) Internationale Anmeldenummer: PCT/EP2005/005474
(87) Internationale Veröffentlichungsnummer: WO 2005/116401

(56) Entgegenhaltungen:
- EP-A- 1 362 979
- DD-A- 100 517
- DE-A1- 4 437 525
- DE-A1- 19 925 721
- GB-A- 2 029 963
- US-A- 2 074 524
- US-A- 5 298 987
- US-A- 5 663 559

## Beschreibung

Die Erfindung betrifft eine Vorrichtung zur Untersuchung von Ankerbohrlöchern, die aus einer mit einem Schubgestänge in dem Bohrloch verfahrbaren Sonde mit einer optischen Erfassungseinheit besteht.

In der US 5,663,559 wird ein Verfahren und eine Vorrichtung zur Herstellung eines Bildes einer Erdformation bei Erdöl-Prospektionsbohrungen beschrieben.

Die EP 0 658 253 B1 offenbart ein Bohrlochbetrachtungsinstrument zur Untersuchung des Inneren eines Bohrloches bzw. eines Schachtes bei Erdöl-Prospektionsbohrungen.

Die WO 94/07147 A1 betrifft ein Verfahren und eine Vorrichtung zur gleichzeitigen videotechnische Ermittlung der Grundwasser-Strömungsrichtung und -Geschwindigkeit für Bohrdurchmesser > 2 Zoll.

Die in diesen Druckschriften offenbarten Verfahren und Vorrichtungen sind für die Untersuchung von Ankerbohrlöchern nicht geeignet, da Ankerbohrlöcher in der Regel einen Durchmesser von 1 bis 2 Zoll aufweisen.

Die DD 100 517 A und die DE 44 37 525 A1 offenbaren weitere Sonden zur Untersuchung eines Bohrloches.

Aus der DE 199 25 733 C2 ist es bekannt, dass Bohrlöcher mit einem Endoskop optisch betrachtet werden können (Bohrlochendoskopie).

Bei dieser Endoskopie wird die Bohrlochwand visuell vor Ort inspiziert, eine Abspeicherung der Beobachtung und eine wahre räumliche Zuordnung der gebirgsmechanischen Gefügedaten ist nicht möglich.

Der Erfindung liegt die Aufgabe zugrunde, eine Vorrichtung zur Verfügung zu stellen, mit der es ermöglicht wird, die Bohrlochwand von Ankerbohrlöchern optisch zu erfassen und die so ermittelten Informationen derart auszuwerten, dass eine sicherheitsrelevante Beurteilung des Gebirgszustandes und eine objektive Dokumentation während des Streckenvortriebs erhalten wird.

Diese Aufgabe wird durch die Merkmale des Anspruchs 1 gelöst.

Weiterbildungen sind in den Unteransprüchen aufgeführt.

Die erfindungsgemäße Ankerbohrlochsonde, die als kabellose, d.h. autarke Sonde ausgeführt ist, wird in den Ankerbohrlöchern verfahren und die Oberfläche des Bohrloches optisch digital erfasst und abgespeichert. Dadurch wird eine Dokumentation der Bohrlochwand ermöglicht, durch die mittels eines Auswerteprogramms die wahre Raumlage von Trennflächen und Schichten ermittelt werden kann. Das Auswerteprogramm ermöglicht die komfortable Verwaltung der ermittelten Daten in einer Datenbank, die Bildbearbeitung und Auswertung der Bohrlochbilder und deren Interpretation.

Für Einsätze im untertägigen Steinkohlenbergbau ist die Ankerbohrlochsonde explosionsgeschützt ausgeführt.

Die Wegerfassung wird mit Hilfe eines Kontakträdchens, an dem ein Bewegungssensor zur Ermittlung des Weges angeordnet ist, durchgeführt. Es ist auch möglich, dass die Sondenbewegung mit einem Bewegungssensor unmittelbar erfasst wird. Dieser Bewegungssensor strahlt auf die Bohrlochwand und es werden die Reflexionen bei der Bewegung von der Sonde erfasst und daraus der Weg ermittelt.

Durch die integrierten Lagesensoren wird die Lage der Sonde im Bohrloch erfasst und zusammen mit der Bildinformation gespeichert. Die Ermittlung der wahren Lage der Trennflächen wird durch das Auswerteprogramm unter Einbeziehung der Sondenraumlagendaten ermittelt.

Das gespeicherte digitale Abbild der Oberfläche der Bohrlochwand wird zur Strukturaufklärung und zur Analyse von lithologischen und petrographischen Eigenschaften verwendet.

Dabei werden die wahren Raumlagen der Trennflächen und deren Häufigkeitsverteilung zur Ermittlung der Kluftkörper im Hangenden einer Strecke bzw. in der Firste eines Tunnels ermittelt. Die häufigere Befahrung der Bohrlöcher ergibt eine optimierte unabhängige und objektiv vergleichbare Information über den Auflockerungsverlauf und -zustand der Streckenfirste.

Mit Hilfe des Auswerteprogramms und der Datenbank ist es möglich, die Daten älterer Untersuchungen mit den neueren Untersuchungsergebnissen abzugleichen, so dass Veränderungen der Öffnungsweiten erfassbar sind. Dieses rechtzeitige Erkennen von Auflockerungszonen ermöglicht ein frühzeitiges Handeln. Eine sicherheitsrelevante Beurteilung des Gebirgszustandes ist damit jederzeit möglich. Außerdem ist die Aufklärung von Gebirgseigenschaften bei der Planung und Optimierung des Streckenausbaus und speziell der Ankerdimensionierung von großer Wichtigkeit. Bei auftretenden Schwierigkeiten während des Streckenvortriebes kann schnell eine Dokumentation des Ankerbohrloches erfolgen.

Die Stromversorgung der Ankerbohrlochsonde erfolgt mit herkömmlichen Mignon-Batterien. Die Bohrlochwandbilder werden über einen Farb-CCD-Sensor digital erfasst und in der Sonde gespeichert. Der Speicher ist ausreichend für mehrere Messungen, so dass die Sonde nicht nach jeder Messung ausgelesen werden muss. Die Steuerung und Kalibrierung der Ankerbohrlochsonde wird zusammen mit einem mobilen PC über eine am Sondenende im Batterieteil integrierte Hochgeschwindigkeitsinfrarotschnittstelle vorgenommen. Über diese Infrarotschnittstelle können auch die erfassten Daten ausgelesen werden.

Üblicherweise werden die mit der Ankerbohrlochsonde gemachten Aufnahmen mit Hilfe einer USB-Auslesebox aus dem Sondenspeicher kopiert und von der Software importiert. Ein Assistent unterstützt hierbei die Eingabe spezifischer Zusatzinformationen zur jeweiligen Messung. Möglich sind u.a. die Ergänzung von Kommentaren der Daten zu Bohrlochlänge und -durchmesser und die Zuordnung zu - ggfls. bereits im Rahmen früherer Messungen definierten - Lokationen und Bohrlöchern.

Außerdem werden umfangreiche Möglichkeiten zur grafischen Bearbeitung der von der Sonde aufgezeichneten Digitalbilddaten angeboten. Der Bearbeiter kann die Bilder u.a. beschneiden, Helligkeit, Kontrast, Intensität und Gammawert verändern, Schärfen weichzeichnen und glätten. Die Bilder können in ihrer axialen Orientierung gedreht und ausgerichtet werden. Daneben gibt es eine Bereinigungsfunktion für die Eliminierung von Messartefakten.

Mit Hilfe der Software können aus den Bohrlochbildern genügend Daten des durchbohrten Gebirges bestimmt werden. Die Ermittlung der Trennflächenorientierung geschieht teilautomatisch durch "Picken" (anklicken) und Zuordnung zu den jeweiligen Typen (z.B. Kluft, Schichtfläche) der im Bild erkennbaren Strukturen. Durch die zusätzliche Verarbeitung der Raumlagedaten der Sonde kann auch die wahre Raumlage der Trennflächen durch das Auswerteprogramm ermittelt werden. Eine lithologische Beschreibung der entsprechenden Teufenabschnitte ist ebenfalls möglich.

Im Rahmen der Auswertung erfolgt somit die Gesteinserkennung und die Festlegung der Grenzen und die Bestimmung des Umfanges und des Grades der Auflockerungszonen. Sämtliche Daten werden in der Datenbank für die Dokumentation und für Wiederholungsmessungen abgelegt.

Die Strukturen werden sowohl im Bild der Bohrlochwand markiert als auch in verschiedenen 3D-Ansichten als Fläche visualisiert. Dabei werden zunächst 2D-Formblätter für einzelne Messquerschnitte der Strecke in Anlehnung an die Bohrlochendoskopie erstellt, außerdem erlaubt die Software eine 3D-Darstellung der Bohrlöcher (Lage im Tunnel/Strecke/Bohrmangel mit Trennflächengefüge).

Mit den in der Datenbank archivierten und verwalteten Bilddaten und den Informationen über das Bohrloch (Lokation, Raumlage, Maße, Tunnelprofil, usw.) ist ein Vergleich aktueller Messdaten mit zu einem früheren Zeitpunkt erfolgten Messungen in demselben Bohrloch oder mit Daten benachbarter Bohrlöcher möglich. Dadurch können in der Strecke die Art und die Ausdehnung sowie die Entstehungszeit der Schwächezonen ermittelt werden.

Die Ankerbohrlochsonde ist in einer bevorzugten Ausführungsform eine kabellose autarke optische Sonde mit einem Durchmesser von 23 mm. Sie ist damit zur digitalen Erfassung der Bohrlochwand von Bohrlöchern von einem Durchmesser von 25 bis 37 mm geeignet. Aufgrund des kleinen Durchmessers und geringen Gewichtes kann die Sonde mit Hilfe von Verlängerungsstangen einfach per Hand im Bohrloch verfahren werden.

Die Bohrlochsonde setzt sich aus einem Videokopf, dem Wegsensor, dem Elektronikteil, dem Speichermodul und dem Batterieteil, das zusätzlich eine Infrarotschnittstelle beinhaltet, zusammen. Durch Datenübertragung wird ein Monitoring der Untersuchungen ermöglicht.

Gesteuert wird die Bildaufnahme über den Wegsensor, der neben der Aufnahmesteuerung die Teufenmessung und damit die Möglichkeit zur genauen Einmessung der Strukturen, z.B. Trennflächenabstände und RQD-Index-Ermittlung, Rissöffnungsweitenbestimmung, Schichtmächtigkeiten usw., bietet.

Durch die Lagesensorwerte kann die wahre Raumlage des Trennflächengefüges bestimmt werden.

Die Erfindung wird nachfolgend anhand eines Ausführungsbeispiels und einer Zeichnung näher erläutert. Es zeigen:
- Figur 1: eine schematische Darstellung des Verfahrens zur Ermittlung der Gebirgsstruktur im Streckenmantel
- Figur 2: einen Querschnitt durch den Videokopf
- Figur 3: eine Gesamtdarstellung der Ankerbohrlochsonde
- Figur 4: eine schematische Darstellung des Wegsensors
- Figur 5: eine schematische Darstellung des Videokopfes in einem Bohrloch

### Ausführungsbeispiel

Mit einer Sonde, die folgende Spezifikationen aufweist, wurde ein Ankerbohrloch untersucht.

| | |
|---|---|
| Stromversorgung: | 5 x Duracel MN 1500, 1,5 V |
| Datenspeicher: | 256 MB |
| Sondenlänge: | 1.300 mm |
| Sondendurchmesser: | 23 mmm |
| Sondengewicht: | 2,2 kg |
| Sensor: | FARB CCD |
| Messtakt: | 25 Bilder pro Sekunde max. |
| Messgeschwindigkeit: | 5 cm pro Sekunde max. |
| Beleuchtung: | 8 weiße Leuchtdioden |
| Teufenmessung: | radgesteuerter Wegsensor |

Die Sonde wurde mit Hilfe eines Schubgestänges im Bohrloch verfahren. Durch in jede Kupplung eingebaute Stege wird eine gute Kontrolle der Orientierung der Sonde im Bohrloch gewährleistet. Die Ankerbohrlochsonde scannt einen Winkel von 360 Grad, d.h. sie erfasst die komplette Bohrlochwand. In dem zweidimensionalen Abbild der Bohrlochwandoberfläche, die einer Zylinderoberfläche entspricht, ist die Bohrlochwand abgerollt projiziert. Dies führt dazu, dass planare Strukturen, wie z.B. Schichtflächen, Klüfte etc., die nicht genau senkrecht zur Bohrlochachse liegen, in dieser Ansicht als sinusförmige Linien erscheinen. Mit Hilfe der Sondenuntersuchung konnten die wahre Raumlage und die Häufigkeit der Kluftflächen erfasst und dargestellt werden.

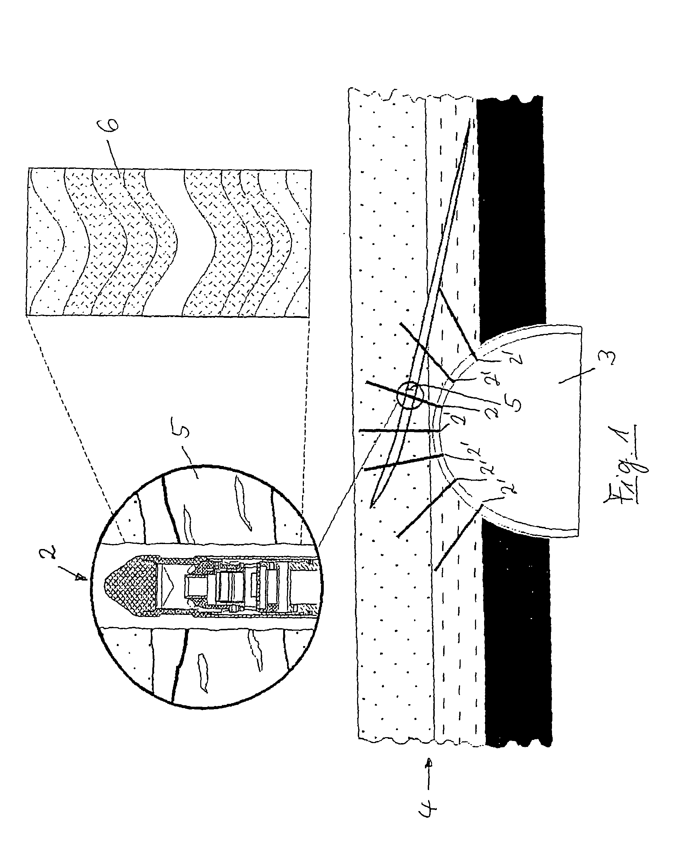

In der Figur 1 ist das Verfahren zur Untersuchung von Ankerbohrlöchern zur Ermittlung der Gebirgsstruktur im Streckenmantel schematisch dargestellt. Eine Ankerbohrlochsonde 1 wird mit Hilfe eines Schubgestänges in einem Ankerbohrloch 2 verfahren. In einer Strecke 3 sind noch weitere Ankerbohrlöcher 2' angeordnet. Dadurch kann mit Hilfe der Ankerbohrlochsonde 1 die Struktur des Gebirges 4 analysiert werden. Die Ankerbohrlochsonde 1 befindet sich in dem Ankerbohrloch 2 im Bereich eines Risses 5. Mit Hilfe des Videokopfes wird ein zweidimensionales Abbild 6 der Bohrlochwandoberfläche digital aufgenommen.

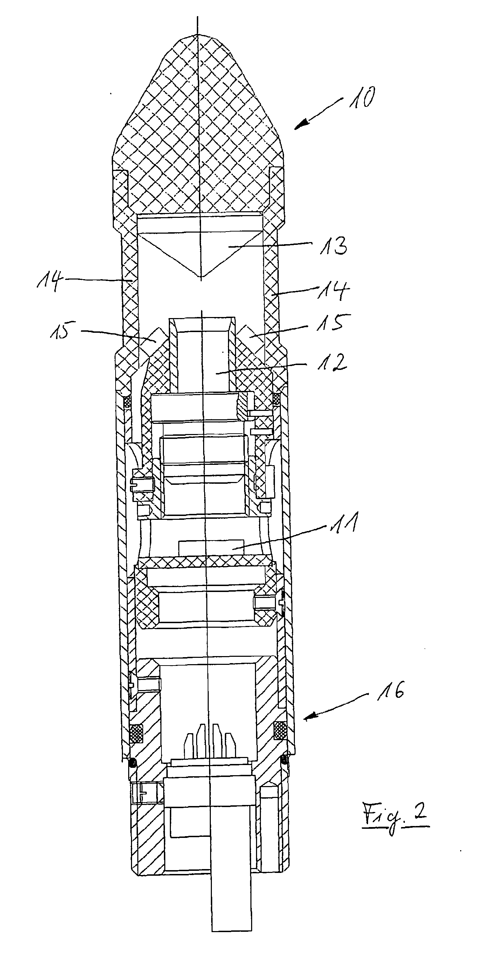

Aus der Figur 2 geht hervor, dass ein Videokopf 10 einen Farb-CCD-Sensor 11 aufweist, dem ein Objektiv 12 zugeordnet ist. Mit Hilfe eines Kegelspiegels 13 kann durch ein Sichtfenster 14 die Bohrlochwand, die durch Leuchtdioden 15 beleuchtet wird, optisch digital erfasst werden. Am unteren Ende des Videokopfes 10 ist eine Steckverbindung 16 angeordnet.

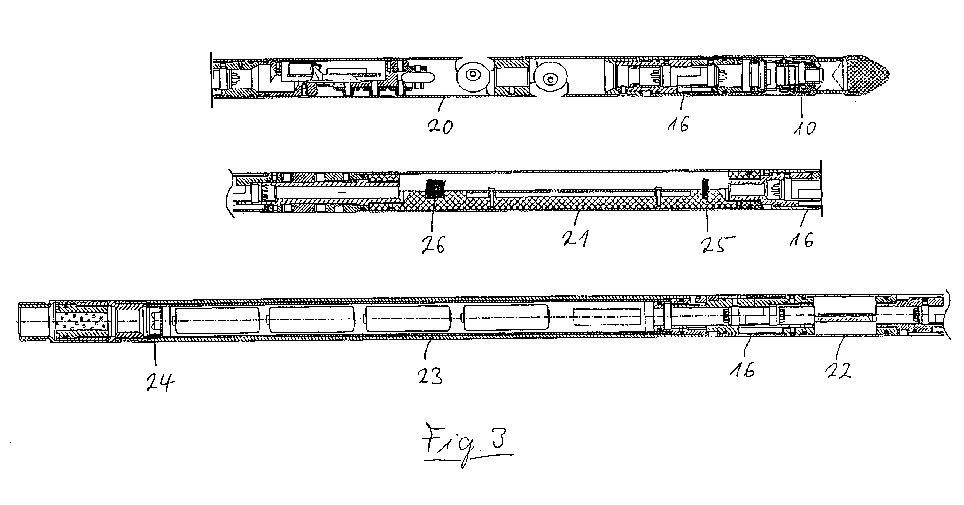

In der Figur 3 ist die Ankerbohrlochsonde 1 dargestellt. Sie setzt sich aus dem Videokopf 10, dem Wegsensor 20, einem Elektronikteil 21, einem Speichermodul 22 und einem Batterieteil 23, das zusätzlich eine Infrarotschnittstelle 24 beinhaltet, zusammen. In dem Elektronikteil 21 sind zwei Lagesensoren 25 und 26 angeordnet. Die einzelnen Bestandteile der Ankerbohrlochsonde 1 sind durch Steckverbindungen 16 miteinander verbunden.

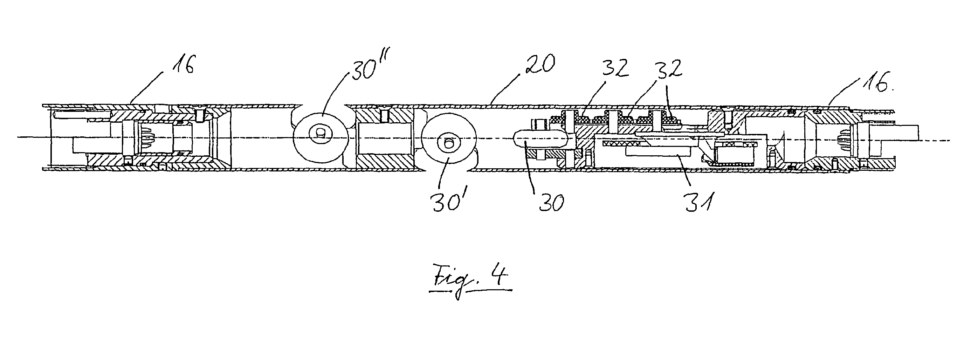

Aus der Figur 4 geht hervor, dass der Wegsensor 20 sich aus 3 um 120 Grad versetzt angeordnete federnd gelagerten Rädchen 30, 30' und 30" besteht. An dem Rädchen 30 ist ein Bewegungssensor 31 zur Ermittlung des Weges der Ankerbohrlochsonde 1 angeordnet.

Aus Platzgründen wird die Bewegung des Rädchens 30 auf Zahnräder 32 übertragen und von dem Bewegungssensor 31 erfasst.

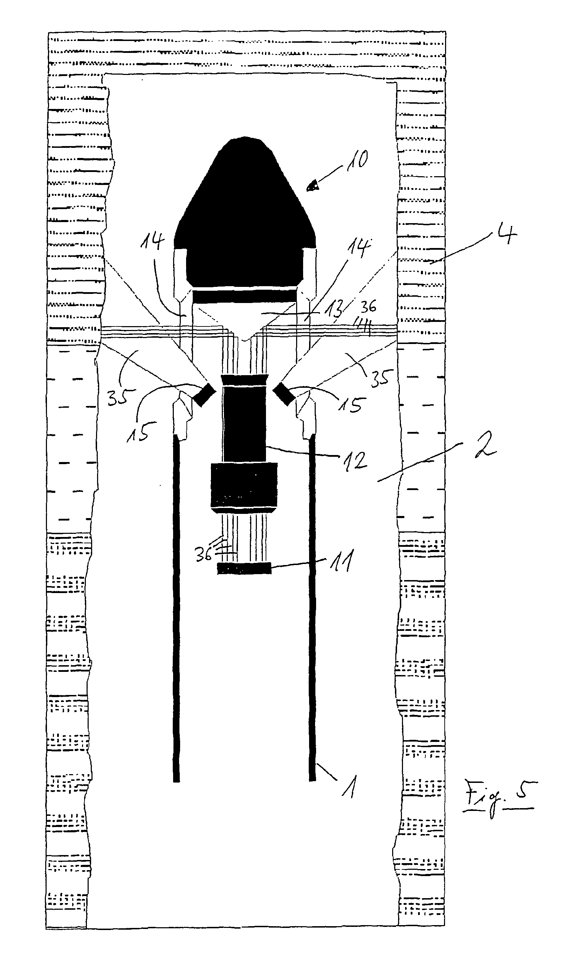

Aus der Figur 5 geht hervor, dass sich der Videokopf 10 der Ankerbohrlochsonde 1 in dem Ankerbohrloch 2 befindet. Die übrigen Bezugszeichen haben die gleichen Bedeutung wie in der Figur 2. Mit den Leuchtdioden 15 wird mit einem Lichtkegel 35 die Bohrlochwand des Ankerbohrloches 2 beleuchtet. Im Bereich der Strahlen 36 wird die Bohrlochwand des Ankerbohrloches 2 optisch digital mit Hilfe des Farb-CCD-Sensors 11 in Abhängigkeit vom Weg erfasst. Dieses Abbild der Bohrlochwand wird mit Hilfe des Auswerteprogramms gespeichert und menügesteuert halbautomatisch untersucht. Dadurch wird die Struktur des Gebirges 4 ermittelt.

### Bezugszeichenliste

- 1: Ankerbohrlochsonde
- 2: Ankerbohrloch
- 2': Ankerbohrloch
- 3: Strecke
- 4: Gebirge
- 5: Riss
- 6: zweidimensionales Abbild
- 10: Videokopf
- 11: Farb-CCD-Sensor
- 12: Objektiv
- 13: Kegelspiegel
- 14: Sichtfenster
- 15: Leuchtdioden
- 16: Steckverbindung
- 20: Wegsensor
- 21: Elektronikteil
- 22: Speichermodul
- 23: Batterieteil
- 24: Infrarotschnittstelle
- 25: Lagesensor
- 26: Lagesensor
- 30: Rädchen
- 30': Rädchen
- 30": Rädchen
- 31: Bewegungssensor
- 32: Zahnräder
- 35: Lichtkegel
- 36: Strahlen

## Patentansprüche

1. Vorrichtung zur Untersuchung von Ankerbohrlöchern (2) die aus einer mit einem Schubgestänge in dem Bohrloch (2) verfahrbaren Sonde (1) mit einer optischen Erfassungseinrichtung besteht, **dadurch gekennzeichnet, dass** die Ankerbohrlochsonde (1) kabellos, d.h. als autarke Sonde ausgeführt ist, aus einem Videokopf (10), der einen Farb-CCD-Sensor (11) mit Objektiv (12) aufweist, das mit einem Kegelspiegel (13) und einem Sichtfenster sowie Leuchtdioden (15) versehen ist, einem Wegsensor (20), einem Elektronikteil (21), einem Speichermodul (22) und einem Batterieteil (23), an dem eine Infrarotschnittstelle angeordnet ist, besteht und dass in dem Elektronikteil (21) zwei Lagesensoren (25, 26) angeordnet sind.

2. Vorrichtung nach Anspruch 1, **dadurch gekennzeichnet, dass** der Wegsensor (20) aus drei, um 120 Grad versetzt angeordneten, federnd gelagerten Rädchen (30, 30', 30") besteht und das Rädchen (30) einen Bewegungssensor (31) zur Ermittlung des Weges aufweist.

3. Vorrichtung nach Anspruch 1 und 2, **dadurch gekennzeichnet, dass** der Wegsensor (20) mit einem Bewegungssensor, der die Sondenbewegung unmittelbar erfasst, versehen ist.

4. Vorrichtung nach Anspruch 1 bis 3, **dadurch gekennzeichnet, dass** die Ankerbohrlochsonde (1) explosionsgeschützt ausgeführt ist.

## Claims

1. A device for inspecting anchor boreholes (2), which consists of a probe (1), movable in the borehole (2) with a push rod linkage, comprising an optical detection device, **characterised in that** the anchor borehole probe (1) is designed so as to be cable-free, i.e. as an autarkic probe, consists of a video head (10), which has a colour CCD sensor (11) with a lens (12) which is provided with a conical mirror (13) and an observation window and also light emitting diodes (15), a displacement sensor (20), an electronics section (21), a memory module (22) and a battery section (23) at which an infrared interface is arranged, and **in that** two position sensors (25, 26) are arranged in the electronics section (21).

2. A device according to Claim 1, **characterised in that** the displacement sensor (20) consists of three spring-mounted rollers (30, 30', 30") arranged so as to be offset by 120 degrees, and the roller (30) has a movement sensor (31) to determine the displacement.

3. A device according to Claim 1 and 2, **characterised in that** the displacement sensor (20) is provided with a movement sensor which directly detects the probe movement.

4. A device according to Claim 1 to 3, **characterised in that** the anchor borehole probe (1) is designed so as to be explosion-proof.

## Revendications

1. Dispositif pour l'analyse de trous pour boulons d'ancrage (2), qui est constitué d'une sonde (1) comprenant un dispositif d'enregistrement optique, apte à se déplacer dans le trou de forage via une tige de poussée, **caractérisé en ce que** la sonde du trou pour boulon d'ancrage (1) est réalisée en l'absence de câble, c'est-à-dire est réalisée sous la forme d'une sonde autarcique et est constituée par une tête vidéo (10) qui présente un capteur en couleurs CCD (11) comprenant un objectif (12) qui est muni d'un miroir sphérique (13) et d'une fenêtre, ainsi que de diodes électroluminescentes (15), par un capteur de trajectoire (20), par une partie électronique (21), par un module de mémoire (22) et par un élément faisant office de batterie (23) sur lequel est disposée une interface infrarouge, et **en ce que** deux capteurs de position (25, 26) sont disposés dans la partie électronique (21).

2. Dispositif selon la revendication 1, **caractérisé en ce que** le capteur de trajectoire (20) est constitué par trois rouages (30, 30', 30") disposés en décalage de 120° et montés sur ressort, le rouage (30) présentant un capteur du mouvement (31) pour la détermination de la trajectoire.

3. Dispositif selon la revendication 1 ou 2, **caractérisé en ce que** le capteur de trajectoire (20) est muni d'un capteur du mouvement qui enregistre directement le mouvement de la sonde.

4. Dispositif selon les revendications 1 à 3, **caractérisé en ce que** la sonde du trou pour boulon d'ancrage (1) est réalisée de façon à être protégée contre les explosions.
